# EUROPEAN PATENT APPLICATION

(11) **EP 2 840 367 A1**
(43) Date of publication of application: **25.02.2015**
(21) Application number: 13778415.3
(22) Date of filing: 17.04.2013
(51) Int. Cl.: G01J 1/02, B60S 1/08, G01C 9/06, G01J 1/42, G01N 21/17, G01W 1/14

(54) **OPTICAL SENSOR**

(30) Priority: 18.04.2012 JP 2012094824; 07.05.2012 JP 2012106100
(71) Applicant: DENSO CORPORATION, Kariya-city, Aichi-ken 448-8661 (JP)
(72) Inventor: SUGIURA, Makiko, Kariya-city Aichi 448-8661 (JP); ANDO, Hiroshi, Kariya-city Aichi 448-8661 (JP); MAKINO, Kazuki, Kariya-city Aichi 448-8661 (JP)
(74) Representative: Winter, Brandl, Fürniss, Hübner, Röss, Kaiser, Polte - Partnerschaft mbB
(86) International application number: PCT/JP2013/002593
(87) International publication number: WO 2013/157258

(57) **Abstract**

An optical sensor that a deterioration of detecting accuracy is suppressed is provided, and an optical sensor that an increase of the number of components and an increase of a physical constitution are suppressed is provided. The optical sensor has a light receiving element (120) having a light receiving surface (120a) to receives light, a detector (140) detecting an inclination of the light receiving surface in the vertical direction, and a correction portion (150a) correcting an output signal of the light receiving element (120) based on an output signal of the detector (140). Furthermore, the optical sensor includes a raindrop detector (210) detecting a raindrop, a light detector (230) detecting an incident light, and a storage part (250) storing these things. The raindrop detector (210) includes a light emitting element (211), a first light receiving element (212), and a first lens (213). The light detector (230) includes a second light receiving element (31) and a second lens (33).

## Description

### CROSS REFERENCE TO RELATED APPLICATIONS

This application is based on Japanese Patent Application No. 2012-94824 filed on April 18, 2012 and Japanese Patent Application No. 2012-106100 filed on May 7, 2012, the disclosure of which are incorporated herein by reference.

### TECHNICAL FIELD

The present disclosure is related to an optical sensor provided with a light receiving element.

Furthermore, the present disclosure is related to an optical sensor having a raindrop detection part to detect a raindrop, a light detector to detect an incident light, and a storage part to store the raindrop detection part and the light detector and be fixed to a mounted member.

### BACKGROUND ART

Conventionally, for example, as described in patent literature 1, a raindrop and optical detection device is proposed, in which a light emitting element, a raindrop-detection light receiving element to receive a light reflected by a front windshield among light emitted by the light emitting element, and a peripheral-light-detection light receiving element are mounted to a substrate. The raindrop and optical detection device have a prism that leads the light emitted from the light emitting element to the front windshield and condenses the light reflected by the front windshield to the raindrop-detection light receiving element, and a lens means that condenses peripheral light to a peripheral-light-detection light receiving element.

The raindrop and optical detection device described in patent literature 1 are provided in a front windshield. Since a slope of the front windshield is different between types of a vehicle, an incident amount of light being incident to the peripheral-light-detection light receiving element may be changed. In addition, when a vehicle is travelling a slope, the incident amount of the light may be changed. Thus, when the incident amount of light is changed according to an installation location, a travelling state of a vehicle, or the like, an output signal of the peripheral-light-detection light receiving element may stop responding to quantity of light of the peripheral light, and a detecting accuracy of the peripheral light may fall down.

In the raindrop and optical detection device described in patent literature 1, when limiting a light receiving range of the peripheral-light-detection light receiving element to a specific range, it is necessary to regulate the light being incident to a lens means. As a configuration implementing this, it may be considered that a plate of the light shielding property is provided between the front windshield and the lens means. However, in this configuration, the number of components may increase and a physical constitution may increase.

### PRIOR ART DOCUMENT

### PATENT DOCUMENT

Patent Literature 1: JP-A-2003-254897

### SUMMARY OF THE INVENTION

It is an object of the present disclosure to provide an optical sensor suppressing a deterioration of a detecting accuracy.

Furthermore, it is an object of the present disclosure to provide an optical sensor suppressing an increase of the number of components and an increase of a physical constitution.

According to a first embodiment of the present disclosure, an optical sensor that has a light receiving element having a light receiving surface to receive light, a detector detecting an inclination of the light receiving surface in the vertical direction, and a correction portion correcting an output signal of a light receiving element based on the output signal of the detecting element is provided.

According to the optical sensor in the first embodiment, a variation of the incident amount of light being incident to the light receiving element according to an installation location of the light receiving element is suppressed. In addition, a variation of the incident amount of the light being incident to the light receiving element according to an installation location or a travelling state of a vehicle is also suppressed. Therefore, it is possible that a deterioration of the detecting accuracy of light, which is a detection object in the light receiving element, is suppressed.

In addition, according to the second embodiment of the present disclosure, an optical sensor has a raindrop detector detecting a raindrop, a light detector detecting an incident light, and a storage part storing the raindrop detector and the light detector and being fixed to a mounted member. The raindrop detector has a light emitting element, a first light receiving element, a first lens that leads the light irradiated from the light emitting element and leads light reflected in the mounted member to the first light receiving element. The light detector has a second light receiving element, a regulating portion that regulates the incident angle of the light being incident to the second light receiving element, and a second lens that condenses the light regulated by the regulating portion to the second light receiving element. The first lens has a property shielding a visible light and transmitting the light irradiated from the light emitting element. The regulating portion is a slit formed in a part of the first lens.

According to the optical sensor in the second embodiment, an increase of the number of the components is suppressed as compared with a configuration in which a regulation portion is provided by another body with the first lens. Accordingly, it is possible to suppress an increase of the physical size of the optical sensor.

### BRIEF DESCRIPTION OF THE DRAWINGS

The above and other objects, features and advantages of the present disclosure will become more apparent from the following detailed description made with reference to the accompanying drawings. In the drawings:
[FIG. 1] FIG. 1 is a sectional view illustrating a schematic configuration of an optical sensor according to a first embodiment;
[FIG. 2] FIG. 2 is a sectional view in the first embodiment illustrating a schematic configuration of a light receiving element and a regulating portion;
[FIG. 3] FIG. 3 is a graph illustrating an elevation angle property in the first embodiment;
[FIG. 4] FIG. 4 is a block diagram illustrating electric connection of each component in first embodiment;
[FIG 5] FIG. 5 is a sectional view illustrating a detector in the first embodiment;
[FIG 6] FIG. 6 is a sectional view illustrating a modification of the optical sensor in first embodiment;
[FIG 7] FIG. 7 is a sectional view illustrating a schematic configuration of the optical sensor according to a second embodiment;
[FIG 8] FIG. 8 is a sectional view taken along a line VIII-VIII line in FIG. 7;
[FIG 9] FIG. 9 is a sectional view illustrating a modification of a slit in the second embodiment;
[FIG 10] FIG. 10 is a sectional view illustrating a modification of the slit in the second embodiment; and
[FIG 11] FIG. 11 is a sectional view illustrating a modification of a second lens in the second embodiment.

### PREFERRED EMBODIMENTS FOR CARRYING OUT THE INVENTION

Followingly, an embodiment when an optical sensor according to the present disclosure is attached to a front windshield of a vehicle will be explained with referring to drawings.

### (First Embodiment)

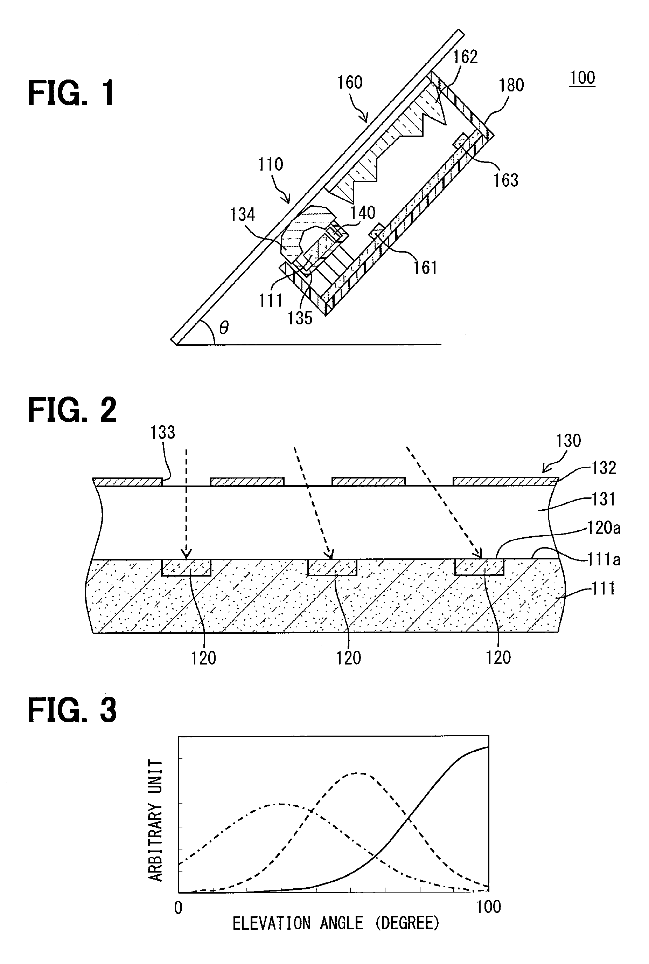

The optical sensor according to the present embodiment will be explained with referring to FIG. 1 to FIG. 4. An optical sensor 100 has a position detector 110 detecting a position and brightness of the sun, a raindrop detector 160 detecting a raindrop, and a storage part 180 storing the detectors 110,160, as substantial components.

As described in FIG. 1, FIG. 2, and FIG. 4, the position detector 110 includes a light receiving element 120, a regulating portion 130 regulating an incident angle of light being incident to the light receiving element 120, a detector 140 detecting an inclination of the light receiving element 120, and a microcomputer 150 outputting an elevation angle and an direction angle, which are calculated based on an output signal of the light receiving element 120, to an air conditioner ECU of the vehicle.

The light receiving element 120 converts the light being incident to the light receiving surface 120a into an electrical signal. The light receiving element 120 according to the present embodiment is a photodiode with a PN junction, and multiple light receiving elements 120 are formed to a semiconductor substrate 111 at a side of a formation surface 111a. As described in FIG. 1, although the optical sensor 100 is attached to the front windshield, a light receiving surface 120a is parallel to an inner surface of the front windshield.

The regulating portion 130 has a translucent film 131, a light-shielding film 132, and an opening 133 formed to the light-shielding film 132. As described in FIG. 2, the one opening 133 corresponds to the one light receiving element 120. Relative positions between each light receiving element 120 and the corresponding opening 133 are different. Accordingly, as illustrated by a dashed line arrow in FIG. 2, the incident angles of the light being incident to each of the light receiving elements 120 are different. Therefore, the elevation angle properties obtained by each of the light receiving elements 120 are different as illustrated in FIG. 3. A phase of the elevation angle property shifts when the inner surface of the front windshield, which is the installation location, is sloped from a horizontal plane. For example, as illustrated in FIG. 1, the light receiving surface 120a is inclined by 90°-θ in the vertical direction and the phase of the output signal of each of the light receiving elements 120 is inclined by 90°-θ when the inner surface of the front windshield is inclined by a degree θ from a horizontal plane.

Incidentally, the position detector 110 according to the present embodiment includes a condenser lens 134 condensing light to the light receiving element 120, and a light shielding box 135 preventing that light irradiated from a mentioned below the LED 161 is incident to the light receiving element 120. As illustrated in FIG. 1, the condenser lens 134 is provided above a formation surface 111a of the semiconductor substrate 111, and a periphery of the semiconductor substrate 111 (the light receiving element 120) is covered with the light shielding box 135. Incidentally, in the present embodiment, the detector 140 is stored in the light shielding box 135.

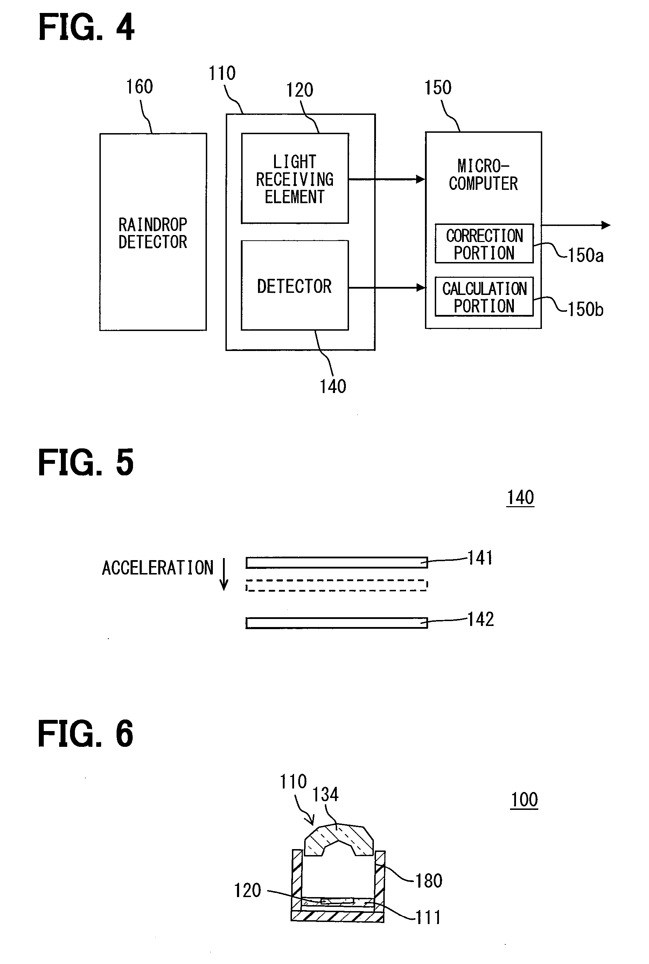

The detector 140 detects an inclination of the light receiving surface 120a in the vertical direction. The detector 140 is an acceleration sensor, and the output signal of the detector 140 is set up to be maximal when the light receiving surface 120a is perpendicular to the vertical direction. As described in FIG. 1, the detector 140 is positioned along with the light receiving element 120 in the light shielding box 135. As described in FIG. 5, the detector 140 has a movable electrode 141 moved by an application of a gravitational acceleration, and a fixed electrode 142 whose position is fixed. The detector 140 detects an acceleration based on a variation of a capacitor configured by the two electrodes 141, 142. In the present embodiment, the movable electrode 141 and the fixed electrode 142 are opposed in a direction perpendicular to the light receiving surface 120a. When the light receiving surface 120a is parallel to the horizontal plane, the movable electrode 141 is positioned so that the movable electrode 141 is located above the fixed electrode 142. According to this configuration, the movable electrode 141 approaches to the fixed electrode 142 by application of the gravitational acceleration, and an distance between the electrodes is minimal at a time when the light receiving surface 120a is perpendicular to the vertical direction. Therefore, a signal proportional to Acosθ is outputted from the detector 140 when the maximal output of the detector 140 is set to A and the inner surface of the front windshield is inclined by angle θ from the horizontal plane.

The microcomputer 150 calculates the elevation angle, a direction angle being incident to the optical sensor 100, and the elevation angle property and the direction angle property, and the microcomputer 150 outputs a calculated result to an air conditioner ECU (not shown) of the vehicle. The microcomputer 150 according to the present embodiment also has a function that corrects the output signal of the light receiving element 120 based on the output signal of the detector 140. The microcomputer 150 has a correction factor corresponding to the output signal of the detector 140, and multiplies the correction factor by the output signal of the light receiving element 120, and corrects the output signal of the light receiving element 120.

As described above, the signal proportional to Acosθ is outputted from the detector 140 when the inner surface of the front windshield is inclined by angle θ from the horizontal plane. When the microcomputer 150 receives the signal, the microcomputer 150 determines that the phase of the output signal of each of the light receiving elements 120 is shifted by 90°-θ and the microcomputer 150 selects the correction factor to correct the phase shift. The microcomputer 150 multiplies the output signal of each of the light receiving elements 120 by the selected correction factor, and corrects the output signal of the light receiving element 120. The elevation angle and the direction angle obtained based on the corrected output signal of each of the light receiving elements 120 are outputted to the air conditioner ECU of the vehicle, and the air conditioner ECU controls the air conditioner based on the elevation angle and the azimuth direction, which are sent. Incidentally, the elevation angle described in the present embodiment means an angle of an upper part from the vehicle, and the direction angle means an angle around the vehicle. The microcomputer 150 corresponds to a component having functions of a correction portion (150a) and a calculation portion (150b).

The raindrop detector 160 has the LED 161, a lens 162, and the light receiving element 163. The LED 161 irradiates light to the front windshield and the lens 162 condenses the light irradiated from the LED 161. The light receiving element 163 receives the light of the LED 161, the light being reflected by the front windshield. Since the light is not reflected by the front windshield when the raindrop adheres to the front windshield, a quantity of the light received with the light receiving element 163 is changed. According to the variation of the quantity of the light, an amount of rainfall is detected.

Followingly, the effects of the optical sensor 100 according to the present embodiment will be explained. As described above, the microcomputer 150 corrects the output signal of the light receiving element 120 based on the output signal of the detector 140 detecting the inclination of the light receiving surface 120a in the vertical direction. According to this configuration, a variation of the incident amount of the light being incident to the light receiving element 120 according to the inclination of the front windshield, which is positioned to the light receiving element 120, is suppressed. In addition, a variation of the incident amount of the light being incident to the light receiving element 120 according to the travelling state of the vehicle is also suppressed. Therefore, a deterioration of the detecting accuracy of the light, which is the detection object in the light receiving element 120, is suppressed.

The detector 140 is an acceleration sensor. Accordingly, the vertical direction is detected by detecting a gravitational acceleration. The output signal of the detector 140 (the acceleration sensor) is set up to be maximal when the light receiving surface 120a is perpendicular to the vertical direction. According to this configuration, it is possible that the inclination of the light receiving surface 120a in the vertical direction is detected according to a variation of the output signal of the acceleration sensor.

As described above, the first embodiment of the present disclosure is explained, and the first embodiment is not restricted to the above example. The first embodiment may be implemented in various modifications within a scope of the present disclosure.

In the present embodiment, an example that the optical sensor 100 has the position detector 110 and the raindrop detector 160 is described. However, as illustrated in FIG. 6, the optical sensor 100 may not have the raindrop detector 160.

In the present embodiment, an example that the position detector 110 has the condenser lens 134 and the light shielding box 135 is described. However, the position detector 110 may not have the condenser lens 134 and the light shielding box 135.

In the present embodiment, as illustrated in FIG. 1, the LED 161 and the light receiving element 163 are provided. However, the light receiving element 163 may be provided at a position of the LED 161, and the LED 161 may be provided at a position of the light receiving element 163. Since the light of the LED in the latter case is regulated by the lens 162 rather than the former cases, the quantity of light of the LED being incident to the light receiving element 120 reduces, and there is a merit that an erroneous detection reduces.

In the present embodiment, an example that the optical sensor 100 is mounted to the front windshield of the vehicle is described. However, as an object mounted to the optical sensor 100, it is not limited to the above mentioned example. For example, the optical sensor 100 may be mounted to a dashboard of the vehicle. In this case, the optical sensor 100 illustrated in FIG. 6 is provided to the dashboard.

In the present embodiment, the output signal of the detector 140 is set up to be maximized when the light receiving surface 120a is perpendicular to the vertical direction. However, as a regulation of the output signal of the detector 140, it is not limited to the above mentioned example. For example, the output signal of the detector 140 may be set up to be minimized when the light receiving surface 120a is perpendicular to the vertical direction. In order to implement this configuration, the movable electrode 141 may be positioned below the fixed electrode 142 when the light receiving surface 120a is parallel to the horizontal plane. As a further example, the output signal of the detector 140 may be set up to be maximal when the light receiving surface 120a is inclined by ϕ in the vertical direction. In order to implement this configuration, when the light receiving surface 120a is inclined by ϕ in the vertical surface, each of the opposed surfaces of the movable electrode 141 and the fixed electrode 142 may be perpendicular to the vertical direction, and the movable electrode 141 may be positioned above the fixed electrode 142.

### (Second Embodiment)

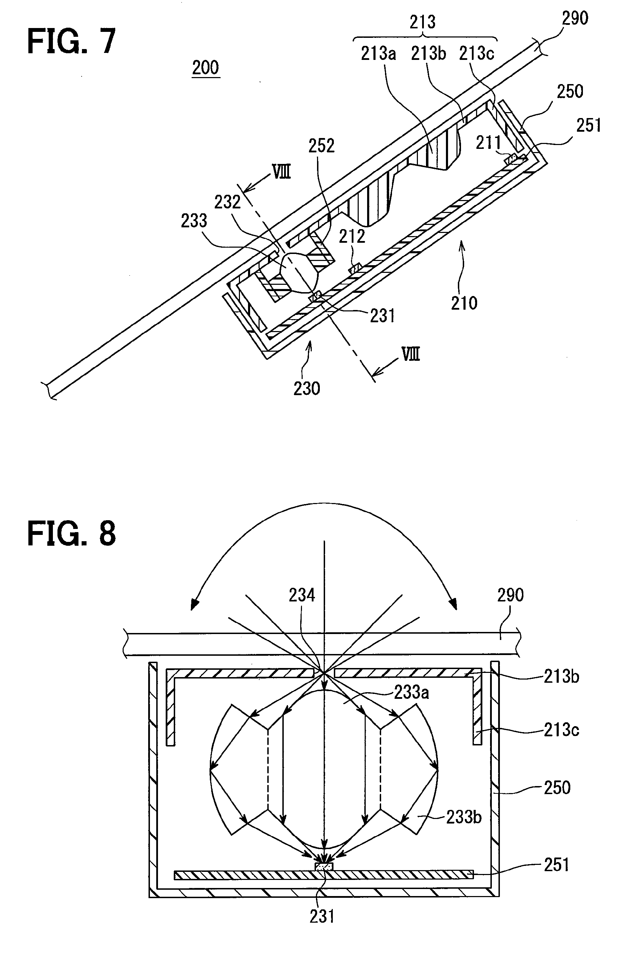

Followingly, an optical sensor according to the second embodiment will be explained with referring to FIG. 7 and FIG. 8. Incidentally, in FIG. 8, a continuous line arrow illustrates the light being incident to an optical sensor 200, and a curve arrow illustrates the elevation angle and the direction angle of the light being incident to the optical sensor 200. The present embodiment is an embodiment that the optical sensor is mounted to the front windshield of the vehicle.

The optical sensor 200 includes a raindrop detector 210 detecting the raindrop, a light detector 230 detecting an incident light, and a storage part 250 storing the detectors 210, 230 and being mounted to the front windshield 290 as substantial components.

As described in FIG. 7, the raindrop detector 210 has a light emitting element 211, a first light receiving element 212, and a first lens 213. The light emitting element 211 irradiates light to the front windshield 290. The first light receiving element 212 receives the light of the light emitting element 211 reflected by the front windshield 290. The first lens 213 leads the light irradiated from the light emitting element 211 to the front windshield 290 and leads the light reflected by the front windshield 290 to the first light receiving element 212. Since the light is not reflected by the front windshield 290 when the raindrop adheres to the front windshield 290, a quantity of light received with the first light receiving element 212 is changed. According to the variation of the quantity of the light, an amount of rainfall is detected.

The light emitting element 211 irradiates light other than visible light, for example, infrared rays or ultraviolet rays. The light emitting element 211 according to present embodiment is a LED, and is mounted to a printed circuit board 251.

The first light receiving element 212 converts the light into an electric signal. The first light receiving element 212 according to the present embodiment is a photodiode with a PN junction, and is mounted to the printed circuit board 251.

The first lens 213 is configured from material with a property that shields the visible light and transmits the light irradiated from the light emitting element 211. The first lens 213 has a condensing part 213a performing a main function as a lens, a flat plate part 213b integrally connected with the condensing part 213a, and a ring shape part 213c integrally connected with the flat plate part 213b. The condensing part 213a has a convex shape, and the condensing part 213a leads the light irradiated from the light emitting element 211 to the front windshield 290 and leads the light reflected by the front windshield 290 to the first light receiving element 212. The flat plate part 213b blockades an opening of the storage part 250, and prevents the peripheral light of the vehicle irradiated to the front windshield 290 from being incident to the first light receiving element 212. The ring shape part 213c surrounds the periphery of the printed circuit board 251, and prevents the peripheral light of the vehicle irradiated to the front windshield 290 from being incident to into the first light receiving element 212.

As described in FIG. 7, the light detector 230 has a second light receiving element 231, a regulating portion 232, and a second lens 233. The second light receiving element 231 receives the peripheral light of the vehicle irradiated to the front windshield 290. The regulating portion 232 regulates the incident angle of the light, which is incident to the second light receiving element 231. The second lens 233 condenses the light regulated by the regulating portion 232 to the second light receiving element 231.

The second light receiving element 231 converts the light into an electrical signal. The second light receiving element 231 according to the present embodiment is a photodiode with a PN junction, and the multiple second light receiving elements 231 are mounted to the printed circuit board 251.

The regulating portion 232 is a slit 234 formed in the flat plate part 213b of the first lens 213, as described in FIG. 8. The one slit 234 corresponds to the one second light receiving element 231, and the incident angles of the light being incident to each of the second light receiving elements 231 are different. Therefore, the elevation angle property and the direction angle property obtained by each of the second light receiving elements 231 are different respectively. The slit 234 according to the present embodiment has a cylindrical shape whose diameter is constant in a thickness direction of the flat plate part 213b.

The second lens 233 includes a convex lens 233a that condenses the light regulated by the regulating portion 232 after the light is refracted into a parallel light once, and emits the condensed light to the second light receiving element 231, and a reflection lens 233b that reflects the light regulated by the regulating portion 232 and emits the light to the second light receiving element 231. As described in FIG. 8, each of the lenses 233a, 233b has a rotational symmetry shape. The reflection lens 233b surrounds a periphery of the convex lens 233a, and the reflection lens 233b and the convex lens 233a are integrally provided.

The convex lens 233a has a cylindrical shape, and end surfaces are curved. The light regulated by the regulating portion 232 is incident to one of the curved end surfaces, and the light emitted from the other of the curved end surfaces is incident to the second light receiving element 231. In the present embodiment, the curved end surfaces are aspheric surfaces.

The reflection lens 233b has a ring shape. The inner ring surface is integrally connected with a side surface of the convex lens 233a. The outer ring surface is curved. The outer ring surface is larger than the inner ring surface. Each of two connection surfaces connecting the outer ring surface and the inner ring surface is inclined toward the center of the convex lens 233a from an edge of the outer ring surface. The light regulated by the regulating portion 232 is incident to one of the inclined connecting surfaces, the entered light is reflected at the outer ring surface, and the reflected light is incident to the second light receiving element 231 through the other of the inclined connection surfaces. In the present embodiment, the outer ring surface is a spherical surface.

As mentioned above, the elevation angle and the direction angle of the light being incident to the second light receiving element 231 are regulated by the regulating portion 232, and the amount of the light being incident to the second light receiving element 231 is regulated by the second lens 233.

The storage part 250 is configured from material having a light shielding property, and has a box shape with one opening. As described in FIG. 7, a printed circuit board 51 is provided to a bottom of the storage part 250. The opening of the storage part 250 is blockaded by the flat plate part 213b of the first lens 213. The storage part 250 according to the present embodiment has a fixing portion 252 that fixes a position of the second lens 233. The fixing portion 252 defines a relative position of the second lens 233 and the regulating portion 232.

Followingly, the effects of the optical sensor 200 according to the present embodiment will be explained. As described above, the first lens 213 is formed with material having a property that shields the visible light. The regulating portion 232 is the slit 234 provided in the flat plate part 213b of the first lens 213. According to this configuration, an increase of the number of components is suppressed as compared with a configuration in which the regulating portion is separately provided from the first lens. Accordingly, an increase of the physical constitution of the optical sensor 200 is suppressed.

The second lens 233 has the convex lens 233a and the reflection lens 233b. According to this configuration, it is possible to condense more light to the second light receiving element 231 as compared with a configuration in which the second lens has only the convex lens.

The reflection lens 233b and the convex lens 233a are united. According to this configuration, an increase of the physical constitution of the second lens 233 is suppressed as compared with a configuration in which the reflection lens is separately provided from the convex lens.

As described above, although the second embodiment of the present disclosure is described, the second embodiment is not limited to the above described example. The present disclosure may be performed in various modified manner without departing from an essence of the present disclosure.

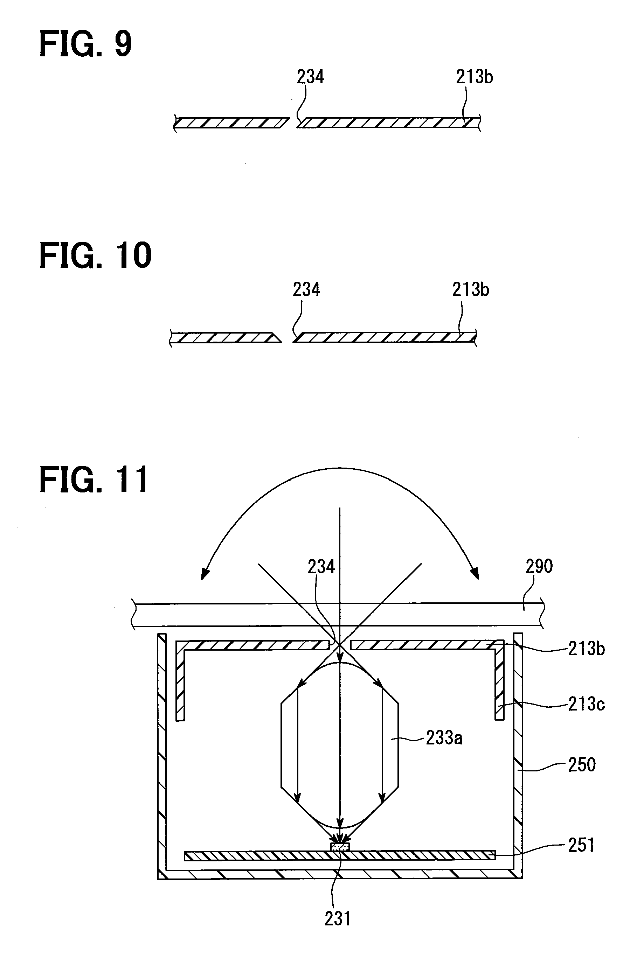

In the present disclosure, as described in FIG. 8, an example in which the slit 234 has the cylindrical shape whose diameter is constant in a thickness direction of the flat plate part 213b is illustrated. However, the shape of the slit 234 is not limited to the present embodiment. For example, as described in FIG. 9, the slit 234 may be formed with a hole in an oblique direction in a thickness direction, and may be a cylindrical shape whose sectional shape is a parallelogram. Alternatively, as described in FIG. 10, the slit 234 may be a cylindrical shape whose diameter is gradually reduces toward the thickness direction and whose sectional shape is a trapezoid. As described in the modifications, by changing the shape of slit 234, regulations of the elevation angle and the direction angle being incident to the second light receiving element 231 may be adjusted.

In the present embodiment, an example in which the second lens 233 has the convex lens 233a and the reflection lens 233b is described. However, as described in FIG. 11, the second lens 233 may be a configuration with only the convex lens 233a.

In the present embodiment, an example that the optical sensor 200 is mounted to the front windshield of the vehicle is described. However, as an object mounted to the optical sensor 200, it is not limited to the above mentioned example. For example, the optical sensor 200 may be mounted to a rear window of the vehicle.

The optical sensor according to the present disclosure includes the light receiving element 120 having the light receiving surface 120a to receive light, the detector 140 detecting an inclination of the light receiving surface in the vertical direction, and the correction portion 150a correcting the output signal of the light receiving element based on the output signal of the detector.

According to the optical sensor in the present disclosure, the variation of the incident amount of the light being incident to the light receiving element 120 depending on a position of the light receiving element 120 is suppressed. In addition, the variation of the incident amount of the light being incident to the light receiving element 120 depending on the installation location or the travelling state of the vehicle is also suppressed. Therefore, it is possible that a deterioration of the detecting accuracy of the light, which is a detection object in the light receiving element 120, is suppressed.

Incidentally, it is preferable that the detector 140 of the optical sensor according to the present disclosure is an acceleration sensor. According to this configuration, it is possible to detect the vertical direction by detecting the gravitational acceleration. It is preferable that the output signal of the acceleration sensor is set up to be maximal or minimal when the light receiving surface is perpendicular to the vertical direction. According to this configuration, it is possible that the inclination of the light receiving surface 120a in the vertical direction is detected by a variation of the output signal of the acceleration sensor.

The optical sensor according to the second embodiment in the present disclosure includes the raindrop detector 210 detecting the raindrop, the light detector 230 detecting an incident light, and the storage part 250 storing the raindrop detector 210 and the light detector 230 and being fixed to a mounted member 290. The raindrop detector 210 has the light emitting element 211, the first light receiving element 212, the first lens 213 that leads the light irradiated from the light emitting element 211 and leads the light reflected by the mounted member 290 to the first light receiving element 212. The light detector 230 has the second light receiving element 231, the regulating portion 232 that regulates the incident angle of the light being incident to the second light receiving element 231, and the second lens 233 that condenses the light regulated by the regulating portion 232 to the second light receiving element 231. The first lens 213 has a property that shields the visible light and transmits the light irradiated from the light emitting element. The regulating portion 232 is a slit 234 formed in a part of the first lens 213.

The second light receiving element 231 may be the light receiving element 120 described in FIG. 2 of the first embodiment. It is possible that the angle and the brightness of the sun are detected more accurately by calculating light intensity on the second light receiving element 231 and the regulating portion 232, which regulates the incident angle of the light being incident. Furthermore, it is also possible to perform a correction by a glass angle using the detector 140.

In the optical sensor according to the second embodiment in the present disclosure, an increase of the number of components is suppressed as compared with a configuration in which the regulating portion 232 is formed separately from the first lens 213. Accordingly, it is possible to suppress an increase of the physical constitution of the optical sensor 200.

As mentioned above, although the embodiments and configurations of the optical sensor according to the present disclosure are exemplified, the embodiment and configuration according to the present disclosure are not limited to each embodiment and each configuration which were mentioned above. While the present disclosure has been described with reference to embodiments thereof, it is to be understood that the disclosure is not limited to the embodiments and constructions. The present disclosure is intended to cover various modification and equivalent arrangements. In addition, while the various combinations and configurations, other combinations and configurations, including more, less or only a single element, are also within the spirit and scope of the present disclosure.

## Claims

1. An optical sensor comprising:
a light receiving element (120) having a light receiving surface (120a) to receives light;
a detector (140) detecting an inclination of the light receiving surface (120a) in a vertical direction; and
a correction portion (150a) correcting an output signal of the light receiving element (120) based on an output signal of the detector (140).

2. The optical sensor according to claim 1, wherein
the detector (140) is an acceleration sensor.

3. The optical sensor according to claim 2, wherein
the output signal of the acceleration sensor is set up to be maximal or minimal when the light receiving surface (120a) is perpendicular to the vertical direction.

4. The optical sensor according to any one of claims 1 to 3,
wherein
the correction portion (150a) has a correction factor according to the output signal of the detector (140), and
the correction portion (150a) multiplies the output signal of the light receiving element (120) by the correction factor, and corrects the output signal of the light receiving element (120).

5. The optical sensor according to any one of claims 1 to 4 further comprising
a regulating portion (130) regulating an incident angle of the light being incident to the light receiving surface (120a), and
a calculation portion (150b) calculating an elevation angle property based on the output signal of the light receiving element (120) corrected by the correction portion (150a).

6. The optical sensor according to any one of claims 1 to 5,
wherein
the optical sensor is mounted to a vehicle.

7. The optical sensor according to claims 6, wherein
the optical sensor is mounted to a front windshield of the vehicle.

8. The optical sensor according to claim 6, wherein
the optical sensor is mounted to a dashboard of the vehicle.

9. An optical sensor comprising:
a raindrop detector (210) detecting a raindrop;
a light detector (230) detecting incident light; and
a storage part (250) storing the raindrop detector (210) and the light detector (230) respectively, and being fixed to a mounted member (290), wherein
the raindrop detector (210) includes
a light emitting element (211),
a first light receiving element (212), and
a first lens (213) leads light irradiated from the light emitting element (211) to the mounted member (290), and leads light reflected by the mounted member (290) to the first light receiving element (212),
the light detector (230) includes
a second light receiving element (231),
a first regulating portion (232) regulating an incident angle of the light being incident to the second light receiving element (231), and
a second lens (233) condensing the light regulated by the first regulating portion (232) to the second light receiving element (231),
the first lens (213) has a property that shields visible light and transmits the light irradiated from the light emitting element (211), and
the first regulating portion (232) is a slit (234) formed at a part of the first lens (213).

10. The optical sensor according to claim 9, wherein
the second lens (233) includes a convex lens (233a) condensing the light regulated by the first regulating portion (232) after refracting into parallel light once, and emitting the condensed light to the second light receiving element (231).

11. The optical sensor according to claim 10, wherein
the second lens (233) includes, in addition to the convex lens (233a), a reflection lens (233b) reflecting the light regulated by the first regulating portion (232), and emitting the light to the second light receiving element (231).

12. The optical sensor according to claim 11, wherein
the reflection lens (233b) has a ring shape,
a periphery of the convex lens (233a) is surrounded with the reflection lens (233b), and
the reflection lens (233b) and the convex lens (233a) are united.

13. The optical sensor according to any one of claims 9 to 12,
wherein
the first lens (213) includes
a condensing part (213a) leading the light irradiated from the light emitting element (211) to the mounted member (290) and condensing the light reflected by the mounted member (290) to the first light receiving element (212), and
a flat plate part (213b) integrally connected with the condensing part (213a), and
the slit (234) is provided in the flat plate part (213b).

14. The optical sensor according to claim 13, wherein
the slit (234) has a cylindrical shape whose diameter gradually reduces in a thickness direction of the flat plate part (213b) and whose sectional shape is a trapezoid.

15. The optical sensor according to claim 13, wherein
the slit (234) has a cylindrical shape in which a hole is provided in an oblique direction in a thickness direction of the flat plate part (213b) and whose sectional shape is a parallelogram.

16. The optical sensor according to claim 13, wherein
the slit (234) has a cylindrical shape whose diameter is constant in a thickness direction of the flat plate part (213b).

17. The optical sensor according to any one of claims 9 to 16,
wherein
the light detector (230) includes
a third light receiving element (120) having a light receiving surface (120a) to receives light,
a detector (140) detecting an inclination of the light receiving surface (120a) in a vertical direction,
a correction portion (150a) correcting an output signal of the third light receiving element (120) based on an output signal of the detector (140),
a second regulating portion (130) regulating an incident angle of the light being incident to the light receiving surface (120a), and
a calculation portion (150b) calculating an elevation angle property based on the output signal of the third light receiving element (120) corrected by the correction portion (150a).

18. The optical sensor according to any one of claims 9 to 16 further comprising,
a detector (140) detecting an inclination of a light receiving surface of the second light receiving element (231) in a vertical direction,
a correction portion (150a) correcting an output signal of the second light receiving element (231) based on an output signal of the detector (140), and
a calculation portion (150b) calculating an elevation angle of the light being incident to the optical sensor based on the output signal of the second light receiving element (231) corrected by the correction portion (150a).

19. The optical sensor according to any one of claims 9 to 18,
wherein
the mounted member (290) is transparent.
